# EUROPÄISCHE PATENTANMELDUNG

(11) **EP 2 679 343 A1**
(43) Veröffentlichungstag der Anmeldung: **01.01.2014**
(21) Anmeldenummer: 13172791.9
(22) Anmeldetag: 19.06.2013
(51) Int. Cl.: B25B 23/14, B25B 23/142, F16B 31/00, F16B 31/02

(54) **Kunststoff-Schraube oder Schraubenaufsatz mit Drehmomentbegrenzer**

(30) Priorität: 26.06.2012 EP 12173691
(71) Anmelder: Riwisa AG, 5607 Hägglingen (CH)
(72) Erfinder: Huber, Roland, 5604 Hendschiken (CH)
(74) Vertreter: Felber, Josef

(57) **Zusammenfassung**

Die Kunststoff-Schraube (1) oder der Schraubenaufsatz (11) weisen einen in ihrem Inneren ein um die Drehachse rotierbares Drehelement (2) auf. Dieses steht in axialer Richtung unter Belastung einer in axialer Richtung wirksamen Feder (3). Das Drehelement (2) ist stirnseitig mit einer Zahnung (6) ausgestattet, sodass diese in einer Drehrichtung an einer zugehörigen Zahnung an der Schraube (1) oder dem Schrauben-Aufsatz einrastet und diese mitnimmt. Ab einem bestimmten Drehmoment gleitet diese an der gegenüberliegenden Zahnung ab, wodurch das Drehelement (2) gegen die wirksame Federkraft der Feder (3) axial verschoben wird und seine Zahnung (6) dieselbe an der Schraube oder dem Schrauben-Aufsatz überspringt und das Drehmoment nicht weitergibt. Entweder weist die Zahnung (6) am Drehelement (6) oder die zugehörige Zahnung an der Schraube (1) oder dem Schrauben-Aufsatz Schrägflächen (7) auf, über welche die Zahnung (6) ab einem bestimmten Drehmoment gleitet und die Gegenzahnung überspringt.

## Beschreibung

Diese Erfindung betrifft Kunststoff-Schraube mit einem Drehmoment-Begrenzer wie auch einen Schrauben-Aufsatz, damit die Schraube oder im Falle eines Schrauben-Aufsatzes die damit festzuziehende Schraube nie überdreht werden kann und somit nicht beschädigt werden kann. Kunststoffschrauben werden gespritzt und können daher in grosser Stückzahl kostengünstig hergestellt werden, während Metallschrauben gegossen, gepresst oder geschliffen werden. Bei Kunststoff-Schrauben kann eingewendet werden, sie seien weniger stark bzw. könnten mit ihren Gewinden ein geringeres Drehmoment aushalten als Metallschrauben, bis das Gewinde zerstört wird. Bei vielen Anwendungen wäre es erwünscht, ein potentielles Zerstören der Gewinde von Kunststoff-Schrauben durch Überdrehen wirksam zu verhindern. Abhilfe bietet natürlich jederzeit ein herkömmlicher Drehmomentschlüssel. Aber ein solcher ist teuer und oftmals nicht zur Hand, und überdies muss er mit seinem Drehmoment und mit seiner Dimension an jede Schraube angepasst sein. Genauso wie Kunststoff-Schrauben kostengünstig in grosser Menge hergestellt werden können, trifft dies auch auf Schraubenkappen oder Schrauben-Aufsätze aller Art aus Kunststoff zu.

Die Aufgabe der vorliegenden Erfindung ist es deshalb, eine Kunststoff-Schraube oder einen Schrauben-Aufsatz anzugeben, welche ein Zerstören des Gewindes der festzuziehenden Schraube durch ein Überdrehen über das zulässige Drehmoment verhindern.

Diese Aufgabe wird gelöst von einer Kunststoff-Schraube oder einem Schraubenaufsatz zum Festziehen von Schrauben aller Art, *dadurch gekennzeichnet,* dass das Innere der Schraube oder des Schrauben-Aufsatzes ein um die Drehachse rotierbares Drehelement enthält, und dieses Drehelement mit einer Zahnung ausgestattet ist, sodass diese in einer Drehrichtung an einer zugehörigen Zahnung an der Schraube oder dem Schrauben-Aufsatz einrastet und diese Teile mitnimmt, und ab einem bestimmten Drehmoment an der gegenüberliegenden Zahnung abgleitet, und seine Zahnung dieselbe an der Schraube oder dem Schrauben-Aufsatz überspringt und das Drehmoment nicht weitergibt, indem entweder die Zahnung am Drehelement oder die zugehörige Zahnung an der Schraube oder dem Schrauben-Aufsatz Schrägflächen aufweist, über welche die Zahnung ab einem bestimmten Drehmoment durch Überwindung der Kraft eines druckfedernden Elementes abgleitet und die Gegenzahnung überspringt.

Anhand der Zeichnungen wird diese Schraube und der Schrauben-Aufsatz in verschiedenen Ansichten dargestellt und beschrieben und die Funktion der einzelnen Teile wird erklärt.
Es zeigt:
- Figur 1:: Eine Schraube als Madenschraube ausgeführt in einer Explosionszeichnung längs ihrer Rotationsachse dargestellt;
- Figur 2:: Die Madenschraube nach Figur 1 zusammengesetzt in einer Schnittzeichnung längst der Rotationsachse dargestellt;
- Figur 3:: Ein Schrauben-Aufsatz in Form eines Gewindebolzens mit Aussensechskant zum Festziehen mittels Innensechskant-Schlüssel und mit Drehmomentbegrenzung in einer perspektivischen Ansicht dargestellt;
- Figur 4:: Den Schrauben-Aufsatz nach Figur 3 in einer Schnittzeichnung längst der Rotationsachse dargestellt;
- Figur 5:: Ein Schrauben-Aufsatz in Form eines Gewindebolzens mit Innensechskant-Mutter, zum Festziehen mittels eines Sechskant-Imbusschlüssels, und mit Drehmomentbegrenzung in einer perspektivischen Ansicht dargestellt;
- Figur 6:: Den Schrauben-Aufsatz nach Figur 5 in einer Schnittzeichnung längst der Rotationsachse dargestellt;
- Figur 7:: Ein Schrauben-Aufsatz in Form eines Gewindebolzens mit Innensechskant, zum Festziehen mittels eines Sechskant-Imbusschlüssels, und mit Drehmomentbegrenzung in einer perspektivischen Ansicht dargestellt;
- Figur 8:: Den Schrauben-Aufsatz nach Figur 7 in einer Schnittzeichnung längst der Rotationsachse dargestellt;
- Figur 9:: Ein Schraubenaufsatz in einer Explosionszeichnung längs der Rotationsachse dargestellt, mit radial federnder Zahnung;
- Figur 10:: Den Schraubenaufsatz nach Figur 9 mit radial federnder Zahnung in einem Schnitt längs der Rotationsachse dargestellt.

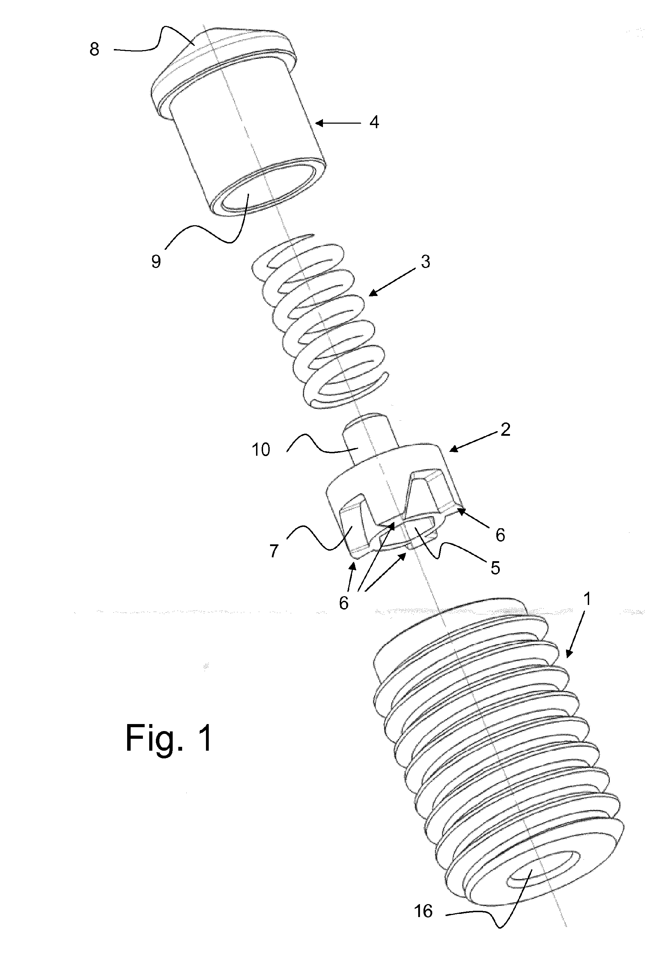

In Figur 1 ist eine erste Ausführung der Erfindung gezeigt, in Form einer Madenschraube 1, deren Bestsandteile hier in einer Explosionszeichnung längs der Rotationsachse dargestellt sind. Diese Madenschraube 1 ist hohl und bildet auf ihrer Kopfseite, wo ein Loch 16 vorhanden ist, innen eine Schulter, welche eine Zahnung aufweist. An dieser Schulter liegt das Drehelement 2 an, das in der hier gezeigten Lage von der Fuss-Seite der Schraube 1 her in deren Inneres eingeschoben wird. Das Drehelement 2 weist auf der gegen die Kopfseite der Schraube 1 gerichteten Seite eine Zahnung 6 auf, wobei die Zähne auf einer Seite angeschrägt sind, sodass Schrägflächen 7 gebildet sind. Die jeweils andere Seite der Zähne verläuft in axialer und radialer Richtung, also jeweils in einer Radialebene. Im Zentrum des Drehelementes 2 ist ein Sechskantloch 5 vorhanden. Auf der in axialer Richtung anderen Seite des Drehelementes 2, das heisst auf der Fussseite des Drehelementes 2, zeigt ein zentraler Zapfen 10 in axialer Richtung vom Drehelement 2 weg. Über diesen Zapfen 2 wird die Druckfeder 3 gestülpt, und schliesslich wird die Madenschraube 1 von ihrer Fussseite oder Spitze her mit der Kappe 4 verschlossen, wobei die Druckfeder 3 ins Innere 9 der Kappe 4 zu liegen kommt und das Drehelement 2 permanent in axialer Richtung belastet und somit gegen den Kopf der Madenschraube 1 drückt. Die Spitze der Kappe 4 ist hier als Kegel 8 ausgeführt, sodass die Kegelspitze auf eine Fläche drücken kann, oder die Kegelfläche 8 auf einer konischen Fläche anschlägt.
Solche Madenschrauben werden zum Beispiel verwendet, um Kunststoff-Armaturen im Sanitärbereich, etwa Mischbatterien für Warm- und Kaltwasser, über konische Messing Anschluss-Stutzen zu stülpen, wobei dann die Hülsen der Armatur, welche über die Anschluss-Stutzen gestülpt werden, je ein radiales Gewindeloch aufweisen, in welche diese Madenschrauben eingesetzt werden. Sie werden mit einem Imbus-Schlüssel festgezogen. Bei herkömmlichen Madenschrauben mit Sechskantloch zum Festziehen besteht immer die Gefahr, dass sie überdreht werden und die Gewinde der Armatur beschädigt werden wodurch die ganze Armatur irreparabel beschädigt ist. Bei der hier gezeigten Madenschraube wird der Imbus-Schlüssel durch das Loch 16 in das Sechskantloch 6 am Drehelement 2 eingeführt. Durch das Drehen des Imbusschlüssels wird das Drehelement 2 gedreht und seine Zahnung 6 nimmt jene an der Schraube 1 mit. Sobald das Drehmoment aber eine Grösse erreicht, unter welchem die Zahnung 6 über die Schrägflächen 7 unter axialer Verschiebung und Zusammenpressens eines druckfedernden Elementes, hier der Druckfeder 3, an der gegenüberliegenden Zahnung abgleitet, rattert das Drehelement 2 bloss noch über die Zahnung, überträgt aber seine Drehung nicht mehr und kann kein Drehmoment mehr übertragen. Das Lösen der Schraube 1 ist hingegen jederzeit möglich, durch Drehen des Imbusschlüssels in Löserichtung. Dabei greift die in einer Radialebene verlaufende Fläche der Zahnung 6 in die gegenüberliegende Zahnung an der Schraube ein und es wird ein fester Kraftschluss erzeugt.
Beim Festziehen einer solchen Madenschraube 1 an einer Sanitärarmatur schlägt die Kegelfläche 8 der Kappe 4 an der Schraubenspitze am konischen Messingstutzen an, wodurch die Armatur auf dem Anschluss-Stutzen gesichert wird. Ein Zerstören des Gewindes der Madenschrauben oder noch schlimmer, der Innengewinde an der Kunststoff-Armatur, durch übermässiges Festziehen der Madenschraube, ist durch die hier vorgestellte Drehmomentbegrenzung wirksam verhindert und Schäden werden zuverlässig vermieden. Die Stärke des übertragbaren Drehmomentes ist abhängig von der Gestaltung der Zahnung, namentlich vom Winkel der Schrägflächen 7 gegenüber der Axialrichtung, sowie von der Druckkraft der Feder. Durch Variation dieser Grössen in der Herstellung dieser Madenschrauben lassen sich beliebige Drehmomente vorbestimmen.

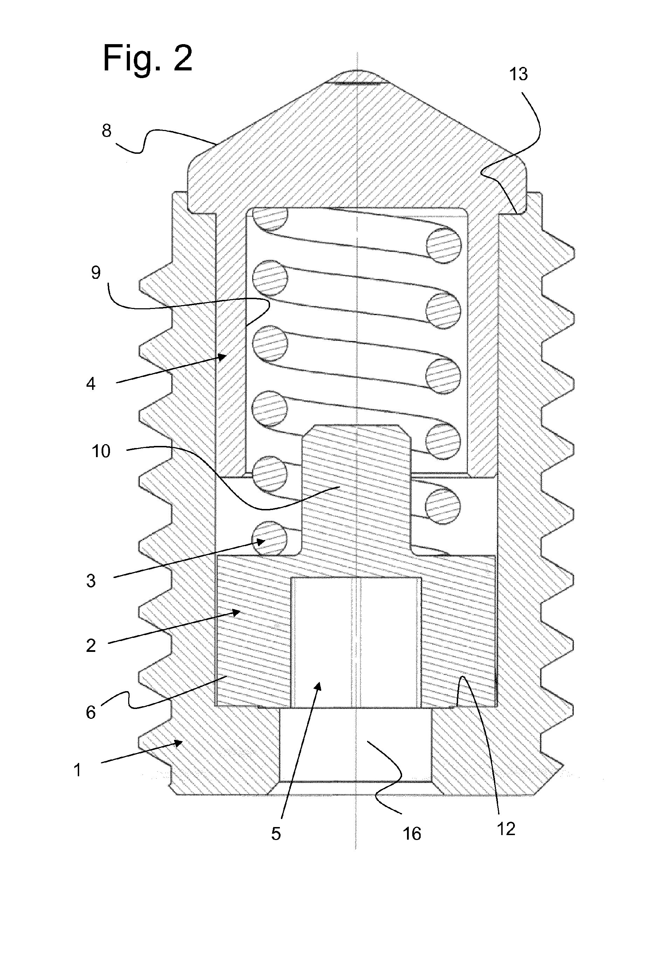

In Figur 2 ist diese Madenschraube nach Figur 1 zusammengesetzt in einer Schnittzeichnung längst der Rotationsachse dargestellt. Man erkennt das Drehelement 2, welches auf der Zahnung an der Innenseite der Schulter 12 der Madenschraube 1 anliegt. Beim druckfedernden Element kann es sich um eine Druckfeder 3 handeln, etwa um eine Metall- oder Kunststoff-Feder. Sie drückt das Drehelement 2 permanent in Richtung des Madenschrauben-Kopfes. Auf der Gegenseite ist die Druckfeder 3 von der Kappe 4 festgehalten, die im Inneren der Madenschraube 1 durch Einpressung gehalten ist, und die hier an der Spitze in einen Kegel 8 ausläuft, welcher auf der Schulter 13 an der Madenschraube 1 anliegt. Durch das Loch 16 am Kopfende der Madenschraube kann ein Imbusschlüssel eingeführt werden und in das Sechskantloch 5 am Drehelement 2 eingreifen.

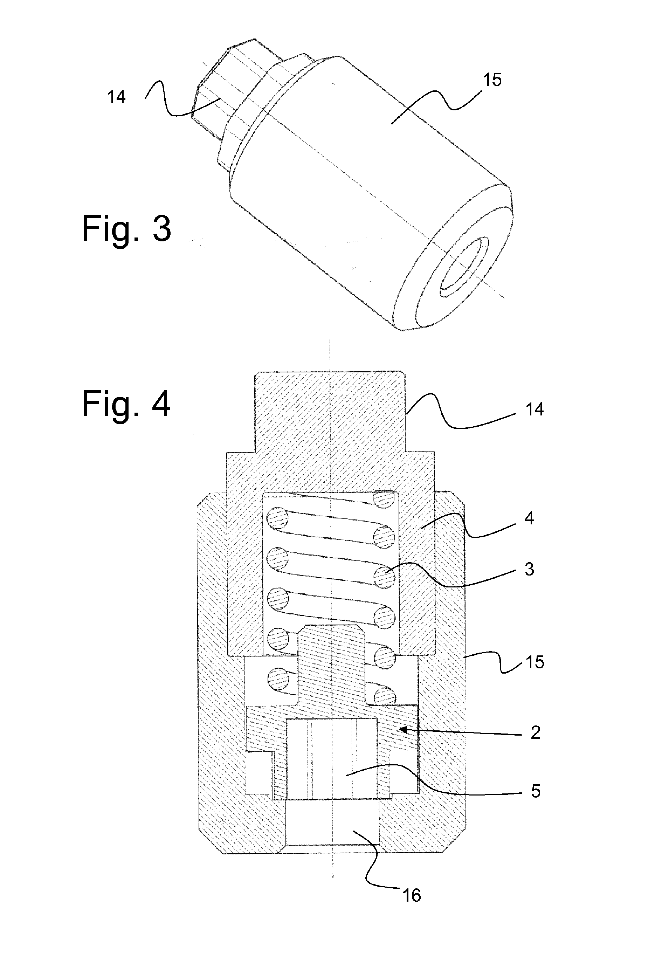

Die Figur 3 zeigt einen Schrauben-Aufsatz 15 mit Aussensechskant 14 zum Festziehen mittels Innensechskant-Schlüssel mit Drehmomentbegrenzung in einer perspektivischen Ansicht dargestellt. Das Innenleben dieser Ausführung ist identisch wie schon zur Figur 1 und 2 beschrieben. Im Unterschied zu den Figuren 1 und 2 ist der zylinderförmige Schrauben-Aufsatz aussen glatt, und die Kappe 4 bildet hier keinen Kegel an ihrer Sitze, sondern einen Aussensechskant 14. Die Kappe 4 ist im Schrauben-Aufsatz 15 durch axial verlaufende Nuten und Federn gegen Verdrehung gesichert. Somit wird das über das Drehelement 2 aufgebrachte Drehmoment über den Schrauben-Aufsatz 15 an den Aussensechskant 14 weitergegeben. Dieser wird in das Innensechskantloch einer Schraube eingesteckt und dann wird mit einem Imbusschlüssel durch das Loch 16 der Schrauben-Aufsatz 15 gedreht, bis das zulässige Drehmoment erreicht ist. Ein höheres Drehmoment ist nicht übertragbar, weil dann das Drehelement 2 bloss noch über die Zahnung rattert, aber diese nicht mehr mitnimmt. Die Stärke des Drehmomentes ist abhängig von der Gestaltung der Zahnung, namentlich vom Winkel der Schrägflächen gegenüber der Axialrichtung, sowie von der Druckkraft der Feder. Durch Variation dieser Grössen lassen sich beliebige Drehmomente vorbestimmen. Die Figur 4 zeigt den Schrauben-Aufsatz nach Figur 3 in einer Schnittzeichnung längst der Rotationsachse dargestellt, in welcher das Innenleben einsehbar ist.

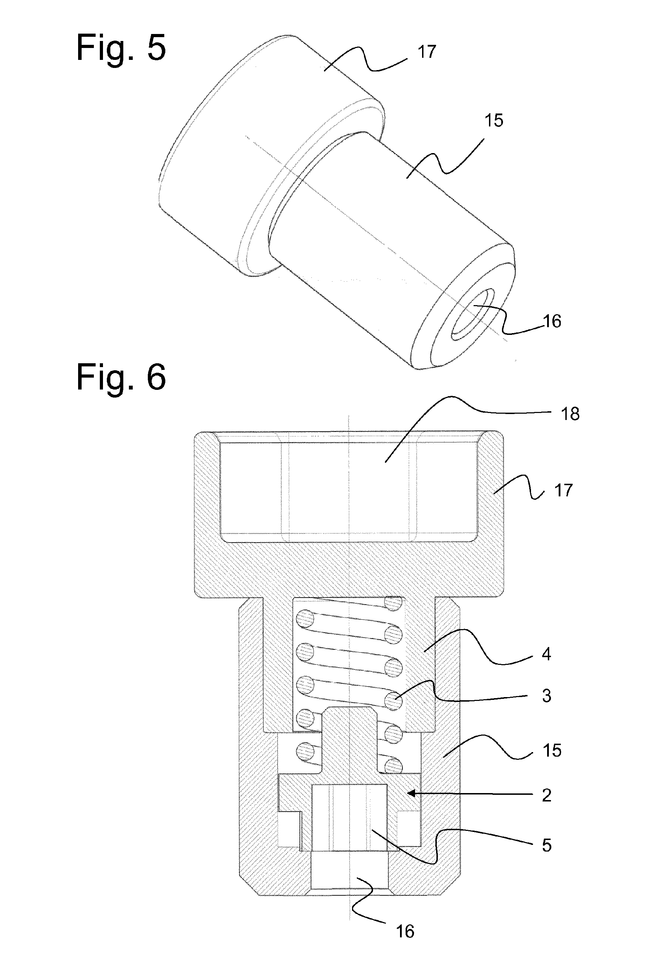

Die Figur 5 zeigt einen Schrauben-Aufsatz 15 mit Innensechskant-Mutter 18, zum Festziehen mittels eines Sechskant-Imbusschlüssels durch das Loch 16, und mit Drehmomentbegrenzung wie beschrieben, in einer perspektivischen Ansicht dargestellt. Die Kappe, welche den Gegendruck auf die Druckfeder 3 erzeugt, ist hier gegen aussen als Hülse 17 mit Innensechskant 18 gestaltet. Damit kann der Schrauben-Aufsatz auf eine Sechskant-Mutter aufgesetzt werden, und dann durch Festziehen mittels Imbusschlüssel durch das Loch 16 am Schrauben-Aufsatz 15 festgezogen werden, bis das maximale Drehmoment erreicht ist. Die Figur 6 zeigt diesen Schrauben-Aufsatz nach Figur 5 in einem Schnitt längst der Rotationsachse dargestellt, wodurch das Innenleben gezeigt ist.

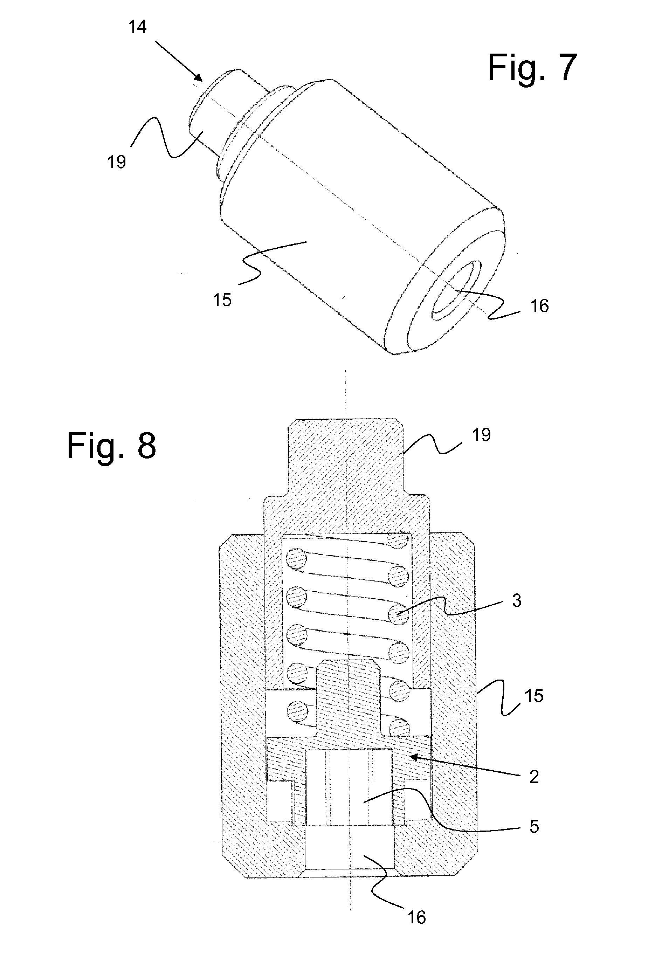

Die Figur 7 zeigt einen Schrauben-Aufsatz 15 mit Innensechskant-Hülse 19, zum Festziehen mittels eines Sechskant-Imbusschlüssels, und mit Drehmomentbegrenzung in einer perspektivischen Ansicht dargestellt. Alles bleibt gleich wie schon zu den vorhergehenden Ausführungen beschrieben, einzig dass die Hülse oder Kappe, welche die Druckfeder 3 aufnimmt, aussen eine Sechskant-Hülse 19 bildet, die also in ihrem Inneren ein Sechskantloch 14 aufweist. Selbstverständlich kann dieses Loch auch als Vierkant oder Dreikant-Loch etc. ausgeführt sein. Damit kann dieser Schraubenaufsatz 15 auf einen entsprechenden Sechskant, Vier- oder Dreikant aufgesteckt werden, und dieser kann hernach mit einem maximalen, begrenzten Drehmoment festgezogen werden. Die Figur 8 zeigt diesen Schrauben-Aufsatz noch in einem Schnitt längs seiner Rotationsachse. Allerdings ist in dieser Schnittzeichnung das Sechskantloch 14 nicht dargestellt.

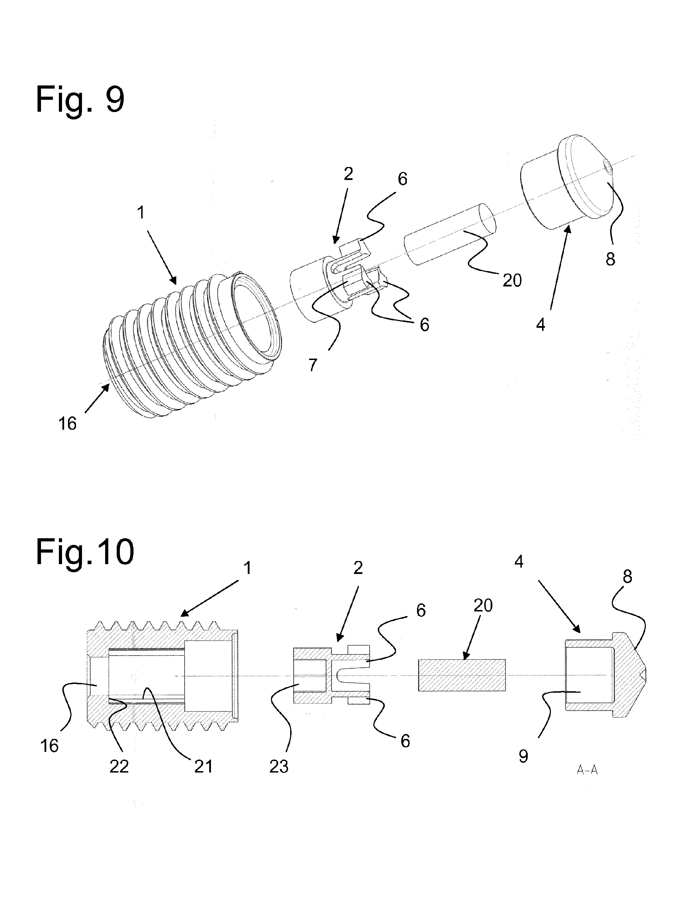

In Figur 9 zeigt eine weitere Ausführung der Erfindung, in Form einer Madenschraube 1, deren Bestandteile hier in einer Explosionszeichnung längs der Rotationsachse dargestellt sind. Diese Madenschraube 1 ist hohl und bildet auf ihrer Fussseite, wo ein Loch 16 vorhanden ist, innen eine Schulter 22, auf welcher das Drehelement 2 im eingesetzten Zustand drehbar aufliegt. Das Drehelement 2 weist hier als alternative Ausführung in radialer Richtung elastisch nachgiebige Zähne 6 auf. Das Drehelement 2 bleibt in seiner axialen Richtung unverschiebbar im Innern der hohlen Madenschraube drehbar, und ist also nicht als Ganzes von einer Feder belastet. Vielmehr bilden die einzelnen Zähne 6 seiner Zahnung die druckfedernden Elemente, indem sie sich elastisch federnd gegen die Rotationsachse hin neigen lassen, wenn ihre Belastung hinreichend gross ist. Die Zähne 6 sind mit schiefwinklig zur Radialebene gerichteten Schrägflächen 7 versehen, während in Umfangsrichtung die gegenüberliegende Form der Zahnung eine Ebene bildet, die in einer Radialebene des Drehelementes 2 liegt. Die Zahnung 6 passt in eine gegenüber an der Innenseite der Madenschraube liegende Zahnung 21, die sich längs des Innenumfangs der Madenschraube 1 erstreckt. Nach dem Einsetzen des Drehelementes 2 in das Innere der Madenschraube 1 wird in gleicher Richtung ein Bolzen 20 im Zentrum des Drehelementes 2 eingesetzt, welches ihm Stabilität verleiht. Die Kappe 4 bildet hier endseitig einen Kegel 8, sodass die Kegelspitze auf eine Fläche drücken kann, oder die Kegelfläche auf einer konischen Fläche anschlägt. Bei der hier gezeigten Madenschraube 1 wird der Imbus-Schlüssel durch das Loch 16 in das Sechskantloch 23 am Drehelement 2 eingeführt. Durch das Drehen des Imbusschlüssels wird das Drehelement 2 gedreht und seine Zahnung 6 nimmt jene 21 an der Schraube 1 mit. Sobald das Drehmoment aber eine Grösse erreicht, unter welchem die Zahnung 6 über die Schrägflächen 7 unter radialer Neigung der Zähne 6 an der gegenüberliegenden Zahnung 21 an der Madenschraube 1 abgleitet, rattert das Drehelement 2 bloss noch über die Zahnung 21 auf der Innenseite der Madenschraube 1, überträgt aber seine Drehung nicht mehr und kann also kein Drehmoment mehr übertragen. Das Lösen der Schraube 1 ist hingegen jederzeit möglich, durch Drehen des Imbusschlüssels in Löserichtung. Dabei greifen die in den Radialebenen stehenden Flächen der Zahnung 6 in die gegenüberliegende Zahnung 21 an der Schraube 1 ein und es wird ein fester Kraftschluss erzeugt.

## Patentansprüche

1. Kunststoff-Schraube (1) oder Schraubenaufsatz (11) zum Festziehen von Schrauben aller Art, ***dadurch gekennzeichnet,* dass** das Innere der Schraube (1) oder des Schrauben-Aufsatzes ein um die Drehachse rotierbares Drehelement (2) enthält, und dieses Drehelement (2) mit einer Zahnung (6) ausgestattet ist, sodass diese in einer Drehrichtung an einer zugehörigen Zahnung an der Schraube (1) oder dem Schrauben-Aufsatz einrastet und diese Teile mitnimmt, und ab einem bestimmten Drehmoment an der gegenüberliegenden Zahnung abgleitet, und seine Zahnung (6) dieselbe an der Schraube oder dem Schrauben-Aufsatz überspringt und das Drehmoment nicht weitergibt, indem entweder die Zahnung (6) am Drehelement (6) oder die zugehörige Zahnung an der Schraube (1) oder dem Schrauben-Aufsatz Schrägflächen (7) aufweist, über welche die Zahnung (6) ab einem bestimmten Drehmoment durch Überwindung der Kraft eines druckfedernden Elementes abgleitet und die Gegenzahnung überspringt.

2. Kunststoff-Schraube (1) oder Schraubenaufsatz (11) zum Festziehen von Schrauben aller Art nach Anspruch 1, ***dadurch gekennzeichnet,* dass** das Innere der Schraube (1) oder des Schrauben-Aufsatzes ein um die Drehachse rotierbares Drehelement (2) enthält, welches in axialer Richtung unter Belastung einer in axialer Richtung wirksamen Feder (3) steht, und dieses Drehelement (2) stirnseitig mit einer Zahnung (6) ausgestattet ist, sodass diese in einer Drehrichtung an einer zugehörigen Zahnung an der Schraube (1) oder dem Schrauben-Aufsatz einrastet und diese mitnimmt, und ab einem bestimmten Drehmoment an der gegenüberliegenden Zahnung abgleitet, wodurch das Drehelement (2) gegen die wirksame Federkraft des druckfedernden Elemente in Form einer Druckfeder (3) axial verschoben wird und seine Zahnung (6) dieselbe an der Schraube oder dem Schrauben-Aufsatz überspringt und das Drehmoment nicht weitergibt, indem entweder die Zahnung (6) am Drehelement (6) oder die zugehörige Zahnung an der Schraube (1) oder dem Schrauben-Aufsatz Schrägflächen (7) aufweist, über welche die Zahnung (6) ab einem bestimmten Drehmoment gleitet und die Gegenzahnung überspringt.

3. Kunststoff-Schraube (1) oder Schraubenaufsatz (11) zum Festziehen von Schrauben aller Art nach Anspruch 1, ***dadurch gekennzeichnet,* dass** das Innere der Schraube (1) oder des Schrauben-Aufsatzes ein um die Drehachse rotierbares Drehelement (2) umfasst, welches an seinem Umfang mit einer Zahnung (6) ausgestattet ist, deren Zähne gleichzeitig druckfedernde Elemente bilden, indem sie in radialer Richtung elastisch federnd nachgiebig ausgeführt sind, sodass diese Zahnung (6) in einer Drehrichtung an einer zugehörigen Zahnung (21) am Innenumfang der umfassenden Schraube (1) oder dem umfassenden Schrauben-Aufsatz einrastet und diese mitnimmt, und diese Zahung (6) ab einem bestimmten Drehmoment aufgrund des elastischen Nachgebens ihrer Zähne gegen das Zentrum des Drehelementes (2) hin an der äusseren Zahnung (21) abgleitet und dieselbe an der Schraube oder dem Schrauben-Aufsatz überspringt und das Drehmoment nicht weitergibt, indem entweder die Zahnung (6) am Drehelement (2) oder die zugehörige Zahnung (21) an der Schraube (1) oder dem Schrauben-Aufsatz Schrägflächen (7) aufweist, über welche die elastisch federnden Zähne der Zahnung (6) ab einem bestimmten Drehmoment gleiten und die Gegenzahnung überspringen.

4. Kunststoff-Schraube (1) oder Schraubenaufsatz (11) zum Festziehen von Schrauben aller Art nach einem der Ansprüche 1 bis 2, **dadurch gekennzeichnet, dass** das Innere der Schraube (1) oder des Schrauben-Aufsatzes ein um die Drehachse rotierbares Drehelement (2) enthält, welches in axialer Richtung unter Belastung eines in axialer Richtung wirksamen druckfedernden Elementes in Form einer Druckfeder (3) steht, und dieses Drehelement (2) stirnseitig mit einer Zahnung (6) ausgestattet ist, sodass diese in einer Drehrichtung an einer zugehörigen Zahnung an der Schraube (1) oder dem Schrauben-Aufsatz einrastet und diese mitnimmt, und ab einem bestimmten Drehmoment an der gegenüberliegenden Zahnung abgleitet, wodurch das Drehelement (2) gegen die wirksame Federkraft der Druckfeder (3) axial verschoben wird und seine Zahnung (6) dieselbe an der Schraube oder dem Schrauben-Aufsatz überspringt und das Drehmoment nicht weitergibt, indem entweder die Zahnung (6) am Drehelement (6) oder die zugehörige Zahnung an der Schraube (1) oder dem Schrauben-Aufsatz Schrägflächen (7) aufweist, über welche die Zahnung (6) ab einem bestimmten Drehmoment gleitet und die Gegenzahnung überspringt.

5. Kunststoff-Schraube oder Schraubenaufsatz zum Festziehen von Schrauben aller Art nach einem der Ansprüche 1 bis 2, **dadurch gekennzeichnet, dass** die Schraube eine Madenschraube (1) mit zylindrischer Sackbohrung ist, und das rotierbare Drehelement (2) von unten eingesetzt ist und oben an einer Schulter mit einer Zahnung (6) unter Belastung durch die nachfolgend eingeführte Druckfeder (3) anschlägt, und dass das Drehelement (2) ein Innensechskant-Loch (5) aufweist, und die Madenschraube (1) auf ihrer Kopfseite ein Loch (16) aufweist, durch welches ein Imbusschlüssel in das Sechskantloch (5) einführbar ist, und dass am Fussende der Madenschraube (1) eine Hülse (4) durch Einpressung eingesetzt ist, an welcher das dortige Ende der Druckfeder (3) anliegt.

6. Kunststoff-Schraube oder Schraubenaufsatz zum Festziehen von Schrauben aller Art nach einem der vorangehenden Ansprüche, **dadurch gekennzeichnet, dass** die Hülse (4) aussen in ein kegelförmiges Ende (8) ausgeformt ist.

7. Kunststoff-Schraube oder Schraubenaufsatz zum Festziehen von Schrauben aller Art nach einem der Ansprüche 1 bis 2, **dadurch gekennzeichnet, dass** der Schrauben-Aufsatz (15) zylinderförmig und aussen glatt ist, und das rotierbare Drehelement (2) in seinem Innern in axialer Richtung unter Belastung einer in axialer Richtung wirksamen Druckfeder (3) steht, und dieses Drehelement (2) stirnseitig mit einer Zahnung (6) mit Schrägflächen (7) ausgestattet ist, sodass diese in einer Drehrichtung an einer zugehörigen Zahnung am Schrauben-Aufsatz (15) einrastet und diesen mitnimmt, und ab einem bestimmten Drehmoment die Schrägflächen (7) seiner Zahnung (6) an der gegenüberliegenden Zahnung am Schrauben-Aufsatz (15) abgleitet, wodurch das Drehelement (2) gegen die wirksame Federkraft der Druckfeder (3) axial verschoben wird und seine Zahnung (6) dieselbe am Schrauben-Aufsatz (15) überspringt und das Drehmoment nicht weitergibt, und dass der zylindrische Schraubenaufsatz (15) an seinem Fussende eine Kappe mit nach aussen ragenden Aussensechskant (14) kraftschlüssig umschliesst.

8. Kunststoff-Schraube oder Schraubenaufsatz zum Festziehen von Schrauben aller Art nach keinem der Ansprüche 1 bis 2, **dadurch gekennzeichnet, dass** der Schraubenaufsatz (15) zylinderförmig und aussen glatt ist, und das rotierbare Drehelement (2) in seinem Innern in axialer Richtung unter Belastung einer in axialer Richtung wirksamen Druckfeder (3) steht, und dieses Drehelement (2) stirnseitig mit einer Zahnung (6) mit Schrägflächen (7) ausgestattet ist, sodass diese in einer Drehrichtung an einer zugehörigen Zahnung am Schrauben-Aufsatz (15) einrastet und diesen mitnimmt, und ab einem bestimmten Drehmoment die Schrägflächen (7) seiner Zahnung (6) an der gegenüberliegenden Zahnung am Schrauben-Aufsatz (15) abgleitet, wodurch das Drehelement (2) gegen die wirksame Federkraft der Druckfeder (3) axial verschoben wird und seine Zahnung (6) dieselbe am Schrauben-Aufsatz (15) überspringt und das Drehmoment nicht weitergibt, und dass der zylindrische Schraubenaufsatz (15) an seinem Fussende eine Hülse umschliesst, in deren Innerem die Druckfeder (3) abgestützt ist, und die aussen in eine Kappe (17) mit Innensechskant (18) ausgeformt ist.

9. Kunststoff-Schraube oder Schrauben-Aufsatz zum Festziehen von Schrauben aller Art nach einem der Ansprüche 1 bis 2, **dadurch gekennzeichnet, dass** der Schrauben-Aufsatz (15) zylinderförmig und aussen glatt ist, und das rotierbare Drehelement (2) in seinem Innern in axialer Richtung unter Belastung einer in axialer Richtung wirksamen Druckfeder (3) steht, und dieses Drehelement (2) stirnseitig mit einer Zahnung (6) mit Schrägflächen (7) ausgestattet ist, sodass diese in einer Drehrichtung an einer zugehörigen Zahnung am Schrauben-Aufsatz (15) einrastet und diesen mitnimmt, und ab einem bestimmten Drehmoment die Schrägflächen (7) seiner Zahnung (6) an der gegenüberliegenden Zahnung am Schrauben-Aufsatz (15) abgleitet, wodurch das Drehelement (2) gegen die wirksame Federkraft der Feder (3) axial verschoben wird und seine Zahnung (6) dieselbe am Schrauben-Aufsatz (11) überspringt und das Drehmoment nicht weitergibt, und dass der zylindrische Schraubenaufsatz (15) an seinem Fussende eine Hülse umschliesst, in deren Innerem die Druckfeder (3) abgestützt ist, und die aussen einen runden Bolzen formt, in dessen Innerem ein Innensechskant eingelassen ist.

10. Kunststoff-Schraube oder Schraubenaufsatz zum Festziehen von Schrauben aller Art nach einem der vorangehenden Ansprüche, **dadurch gekennzeichnet, dass** der Schraubenaufsatz zylinderförmig und aussen glatt sodass diese in einer Drehrichtung an einer zugehörigen Zahnung an der Schraube oder dem Aufsatz einrastet und die Zahnung an der Schraube oder dem Schrauben-Aufsatz mitnimmt, und ab einem bestimmten Drehmoment die Schrägflächen (7) seiner Zahnung (6) an der gegenüberliegenden Zahnung an der Schraube (1) oder dem Schrauben-Aufsatz (15) abgleitet, wodurch das rotierbare Drehelement (2) gegen die wirksame Federkraft des druckfedernden Elementes in Form einer Druckfeder (3) axial verschoben wird und seine der Zahnung dieselbe an der Schraube oder dem Absatz überspringt und das Drehmoment nicht weitergibt.
